Europäisches Patentamt

European Patent Office

Office européen des brevets

(11) Numéro de publication : **0 376 831 B1**

# (12) FASCICULE DE BREVET EUROPEEN

(45) Date de publication du fascicule du brevet :
**19.02.92 Bulletin 92/08**

(51) Int. Cl.⁵ : **B60J 10/06**

(21) Numéro de dépôt : **89403634.2**

(22) Date de dépôt : **22.12.89**

(54) **Perfectionnements aux systèmes de guidage et d'étanchéité pour glaces mobiles de portes d'automobiles.**

(30) Priorité : **28.12.88 FR 8817313**

(43) Date de publication de la demande :
**04.07.90 Bulletin 90/27**

(45) Mention de la délivrance du brevet :
**19.02.92 Bulletin 92/08**

(84) Etats contractants désignés :
**AT BE CH DE ES GB IT LI LU NL SE**

(56) Documents cités :
**EP-A- 0 083 696**
**DE-A- 3 500 791**
**FR-A- 2 419 190**
**FR-A- 2 596 138**
**US-A- 4 628 637**

(73) Titulaire : **ETABLISSEMENTS MESNEL SOCIETE ANONYME DITE :**
**9 et 11, Rue de la Rivière**
**F-78420 Carrières-Sur-Seine (FR)**

(72) Inventeur : **Mesnel, François**
**6 bis, rue Salignac Fénelon**
**F-92200 Neuilly-sur-Seine (FR)**
Inventeur : **Mesnel, Gérard**
**16, rue Victor Hugo**
**F-78420 Carrières-sur-Seine (FR)**

(74) Mandataire : **Jolly, Jean-Pierre et al**
**Cabinet Jolly 54, rue de Clichy**
**F-75009 Paris (FR)**

EP 0 376 831 B1

# Description

La présente invention concerne des perfectionnements apportés aux systèmes du guidage et d'étanchéité pour glaces mobiles de portes d'automobiles, notamment de glaces affleurantes.

On sait qu'en vue d'accroître les qualités aérodynamiques des automobiles, on utilise de plus en plus des glaces dites affleurantes (en anglais : "flush-glass"), qui se déplacent sensiblement dans le prolongement du panneau métallique extérieur des portes d'automobiles.

Pour assurer le guidage et l'étanchéité de ces glaces, on utilise habituellement des profilés en un élastomère extrudé comportant une armature métallique, dont une première partie à section en U formant pince est destinée à être fixée sur une feuillure de l'encadrement de la glace mobile, tandis qu'une seconde partie dite "coulisse", à section en U inversée par rapport à la précédente, sert d'organe de guidage et d'étanchéité pour la glace mobile. Entre ces deux parties, une troisième partie, attenante à la première partie et ayant également une section en U inversée par rapport à celle de cette première partie peut éventuellement être prévue pour recevoir un profilé auxiliaire d'étanchéité du type dit lécheur, ainsi appelé parcequ'au moins une lèvre lèche la face externe de la glace en position fermée de celle-ci. Le lécheur peut aussi faire partie intégrante du profilé de guidage et d'étanchéité.

Pour accroître l'étanchéité et la souplesse de ce profilé, la Demanderesse a proposé, dans sa demande de brevet français FR-A-2 596 138 et dans sa demande de certificat d'addition FR-E-2 623 596 (EP-A-0 318 372), de prévoir dans la base du U de la seconde partie une portion dépourvue d'armature métallique et formant une charnière souple en élastomère. On obtient ainsi une meilleure étanchéité en fin de course de la glace mobile.

La présente invention concerne les systèmes de guidage et d'étanchéité pour glace mobile affleurante équipés de profilés de ce type ou de profilés assurant des fonctions similaires, et elle vise à améliorer le guidage de la glace mobile suivant sensiblement la majeure partie de son déplacement et, plus particulièrement, en fin de course, lorsqu'elle arrive en position de fermeture.

A cet effet, l'invention propose d'équiper la partie rectiligne du profilé, contiguë au pied-milieu de la carrosserie, d'un organe formant glissière, dans lequel est engagé un patin de guidage disposé sur la face externe de la glace mobile, au moins à la partie supérieure de celle-ci.

L'invention a par conséquent pour objet un système pour le guidage et l'étanchéité d'une glace mobile de porte d'automobile, notamment d'une glace affleurante, comprenant un profilé en un élastomère armé, dont une première partie est apte à être rendue solidaire de l'encadrement de vitre, tandis qu'une seconde partie assure le guidage et l'étanchéité de la glace mobile (système du type divulgué par FR-A-2 596 138), caractérisé en ce qu'une partie rectiligne du profilé, contiguë au pied-milieu de la carrosserie, est équipée d'une glissière, dont une semelle est clipsée dans des gorges de la seconde partie du profilé, tandis que la glace mobile comporte, sur la partie latérale de sa face externe contiguë au pied-milieu, au moins à la partie supérieure de cette face, un patin de guidage engagé dans cette glissière, les formes du patin et de la glissière étant telles que le patin soit apte à coulisser dans cette glissière durant tout le déplacement de la glace mobile en y étant maintenu prisonnier.

La glace mobile sera ainsi guidée par le patin de guidage dont elle est munie suivant toute la longueur de son déplacement et, en particulier, lorsqu'elle arrivera dans sa position haute correspondant à l'obturation de l'ouverture de porte.

Une forme de mise en oeuvre de l'invention va être décrite ci-après en détail en référence aux dessins annexés. Cette forme de mise en oeuvre se rapporte à un profilé du type décrit dans les demandes de brevet et de certificat d'addition mentionnées ci-dessus, mais il sera clair, pour l'homme de métier, qu'une telle application n'a pas de caractère limitatif et que l'invention peut être utilisée avec d'autres types de profilés, moyennant de simples adaptations à la portée de l'homme de l'art.

Sur les dessins :

La figure 1 représente une automobile à quatre portes équipées de glaces coulissantes ;

La figure 2 est une coupe transversale partielle, à plus grande échelle, du profilé et de la glace, suivant la ligne II-II de la figure 1.

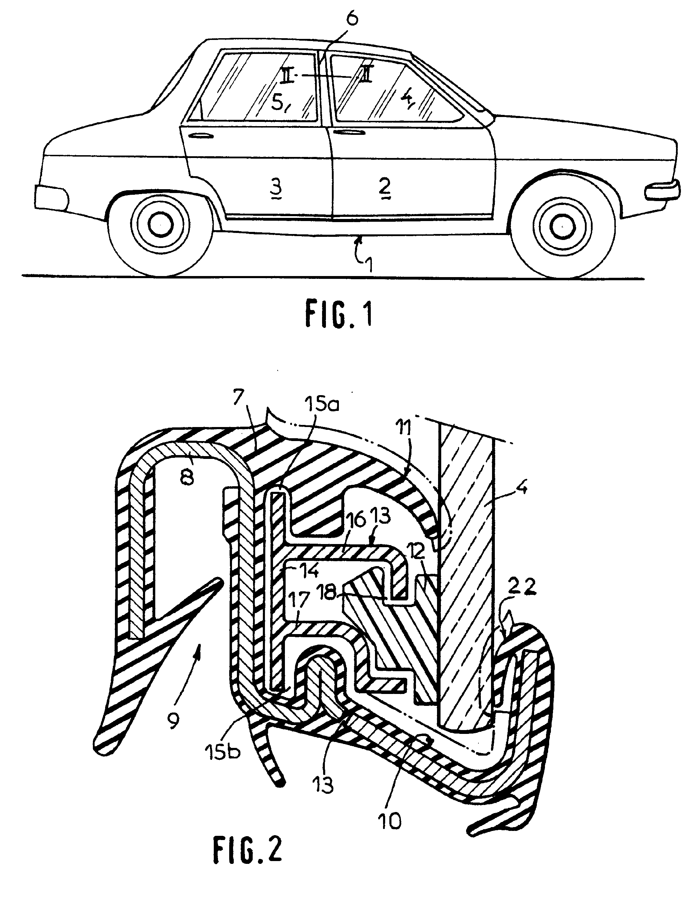

L'automobile 1 représentée sur la figure 1 est une automobile à quatre portes 2, 3, munies chacune d'une glace coulissante 4, 5, dont le guidage et l'étanchéité sont assurés, à sa partie supérieure et suivant ses côtés latéraux, par un profilé en un élastomère du type décrit dans les demandes de brevet mentionnées ci-dessus.

Les parties de ce profilé et des glaces auxquelles s'intéresse la présente invention sont celles qui sont contiguës au pied-milieu 6 et qui sont représentées à grande échelle sur la figure 2.

Comme représenté sur cette figure 2, où, pour plus de clarté, les jeux entre les différents organes ont été exagérés, le profilé est constitué d'un élastomère 7 extrudé sur une armature métallique 8, qui est noyée dans cet élastomère sur la majeure partie de sa section.

Ce profilé comprend une partie à section en U, 9, formant une pince destinée à venir coiffer une armature de la carrosserie, pour en être rendue solidaire, et une seconde partie 10, dite "coulisse", attenante à la précédente et à section en U inversée par rapport à celle-ci. Cette coulisse 10 assure le guidage et l'étanchéité de la glace mobile 4 et, dans ce but, comprend une lèvre souple 11 ou lécheur, qui s'escamote au contact de la vitre 4 et lèche la surface externe de celle-ci, et une lèvre interne souple 22, qui s'escamote également au contact de la vitre et vient s'appliquer contre la face interne de celle-ci.

Comme décrit dans les demandes de brevet précitées, l'armature 8 est sectionnée à la base du U de la coulisse pour former une charnière élastique 13.

Conformément à l'invention, la glace 4 est équipée, sur sa face externe, à la partie supérieure de son bord latéral contigu au pied-milieu 6, d'un patin de guidage 12, qui coopère avec une glissière 13, solidaire du profilé, pour assurer le guidage de la vitre pendant son déplacement.

La glissière 13 comprend une semelle 14 parallèle au pied-milieu 6 et dont les extrémités sont engagées par clipsage dans des gorges 15a et 15b du profilé. Deux branches 16 et 17 font saillie perpendiculairement à la semelle 14 en direction de la glace 4 et, entre ces branches, est engagé le patin 12. Plus précisément, le patin 12 comporte une gorge latérale 18, formant glissière pour l'extrémité recourbée de la branche 16, tandis que la branche 17 a un profil latéral complémentaire de celui du patin afin de le guider latéralement.

La glace 4 est ainsi guidée parfaitement durant tout son mouvement ascendant vers le haut de l'encadrement de vitre et, en particulier, en fin de mouvement, lorsqu'elle arrive au contact de la partie du profilé disposée à la partie supérieure de cet encadrement.

Les formes de la glissière 13 et du patin 12 peuvent bien entendu être absolument quelconques, la seule condition imposée étant que le patin 12 puisse coulisser dans la glissière pendant tout le déplacement de la vitre 4 et que la glissière présente une contre-dépouille maintenant le patin prisonnier de cette glissière. Ces organes peuvent être en tout matériau convenant à leur utilisation, par exemple en polyéthylène pour la glissière 13 et en Nylon (marque déposée) pour le patin 12.

**Revendications**

1. Système pour le guidage et l'étanchéité d'une glace mobile de porte d'automobile, notamment d'une glace affleurante, comprenant un profilé (7) en un élastomère armé, dont une première partie (9) est apte à être rendue solidaire de l'encadrement de vitre, tandis qu'une seconde partie (10) assure le guidage et l'étanchéité de la glace mobile (4), caractérisé en ce qu'une partie rectiligne du profilé, contiguë au pied-milieu (6) de la carrosserie, est équipée d'une glissière (13), dont une semelle (14) est clipsée dans des gorges (15a, 15b) de la seconde partie (10) du profilé, tandis que la glace mobile comporte, sur la partie latérale de sa face externe contiguë au pied-milieu, au moins à la partie supérieure de cette face, un patin de guidage (12), engagé dans cette glissière (13), les formes du patin et de la glissière étant telles que le patin soit apte à coulisser dans cette glissière durant tout le déplacement de la glace mobile en y étant maintenu prisonnier.

2. Système selon la revendication 1, caractérisé en ce que la glissière (13) comporte deux branches parallèles (16, 17) entre lesquelles est engagé le patin (12).

3. Système selon la revendication 2, caractérisé en ce qu'une extrémité recourbée de l'une (16) desdites branches est engagée dans une gorge latérale (18) du patin 12, tandis que l'autre branche (17) épouse la forme latérale du patin (12).

**Patentansprüche**

1. Führungs- und Dichtungssystem einer beweglichen Autotürfensterscheibe, insbesondere einer versenkten Scheibe, mit einem Profil (7) aus einem armierten Elastomer, wobei ein erster Teil (9) für eine Verbindung mit dem Fensterrahmen ausgebildet ist, während ein zweiter Teil (10) die Führung und Abdichtung der beweglichen Scheibe (4) sicherstellt, dadurch gekennzeichnet, daß ein an die Mittelstrebe (6) der Karosserie anschließender, gerader Teil des Profils mit einer Schiene (13) ausgebildet ist, wobei eine Basis (14) in Nuten (15a,15b) des zweiten Teiles (10) des Profils eingelegt ist, während die bewegliche Scheibe am Seitenteil der der Mittelstrebe benachbarten Außenfläche wenigstens im oberen Teil dieser Fläche einen in die Schiene (13) eingreifenden Führungsschuh aufweist, wobei der Schuh und die Schiene derart ausgebildet sind, daß der Schuh für eine Gleitbewegung in der Schiene während der gesamten Verschiebung der beweglichen Scheibe unter einem Halten derselben geeignet ist.

2. System nach Anspruch 1, dadurch gekennzeichnet, daß die Schiene (13) zwei parallele Schenkel (16,17) umfaßt, zwischen welche der Schuh (12) eingreift.

3. System nach Anspruch 2, dadurch gekennzeichnet, daß ein gekrümmtes Ende eines Schenkels (16) in eine Seitennut (18) des Schuhs (12) eingreift, während sich der andere Schenkel (17) an die Seitenform des Schuhs anpaßt.

**Claims**

1. A system for guiding and sealing a movable window of a motor vehicle door, in particular a flush window, comprising a shaped member (7) of a reinforced elastomer, of which a first part (9) is capable of being fixed with respect to the window frame while a second part (10) provides for guiding and sealing of the movable window (4), characterised in that a rectilinear part of the shaped member, which is contiguous to the central pillar (6) of the bodywork, is fitted with a slide (13) of which a base portion (14) is clipped into grooves (15a, 15b) in the second part (10) of the shaped member, while on the lateral part of its external face which is contiguous to the central pillar, the movable window comprises at least in the upper part of said face a guide shoe (12) which is engaged in said slide (13), the shapes of the shoe and the slide being such that the shoe is capable of sliding in said slide throughout the entire displacement of the movable window while being held trapped therein.

2. A system according to claim 1 characterised in that the slide (13) comprises two parallel limbs (16, 17) between which the shoe (12) is engaged.

3. A system according to claim 2 characterised in that a curved end of one (16) of said limbs is engaged into a lateral groove (18) in the shoe (12) while the other limb (17) matches the lateral shape of the shoe (12).

FIG.1

FIG.2

5